(19) Europäisches Patentamt
European Patent Office
Office européen des brevets

(11) **EP 4 020 978 B1**

(12) **FASCICULE DE BREVET EUROPEEN**

(45) Date de publication et mention
de la délivrance du brevet:
**24.04.2024 Bulletin 2024/17**

(21) Numéro de dépôt: **21217568.1**

(22) Date de dépôt: **23.12.2021**

(51) Classification Internationale des Brevets (IPC):
**H04N 25/67** (2023.01) **H04N 5/33** (2023.01)
**H04N 25/671** (2023.01)

(52) Classification Coopérative des Brevets (CPC):
**H04N 25/67; H04N 25/671;** H04N 5/33

(54) **PROCEDE D'ETALONNAGE D'UNE MATRICE DE PHOTODETECTEURS, DISPOSITIF D'ETALONNAGE ET SYSTEME D'IMAGERIE ASSOCIES**

VERFAHREN ZUR EICHUNG EINER MATRIX VON PHOTODETEKTOREN, ENTSPRECHENDE EICHUNGSVORRICHTUNG UND ENTSPRECHENDES BILDGEBUNGSSYSTEM

METHOD FOR CALIBRATING AN ARRAY OF PHOTODETECTORS, ASSOCIATED CALIBRATION DEVICE AND IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2020 FR 2014126**

(43) Date de publication de la demande:
**29.06.2022 Bulletin 2022/26**

(73) Titulaire: **Safran Electronics & Defense**
**75015 Paris (FR)**

(72) Inventeur: **MICHELS, Yves**
**77550 MOISSY-CRAMAYEL (FR)**

(74) Mandataire: **Brevalex**
**Tour Trinity**
**1 B Place de la Défense**
**92400 Courbevoie (FR)**

(56) Documents cités:
**US-A1- 2013 314 536    US-A1- 2015 319 387**
**US-A1- 2018 352 174    US-A1- 2018 376 088**

**Description**

## DOMAINE TECHNIQUE

L'invention concerne un procédé d'étalonnage d'une matrice de photodétecteurs fournissant un ensemble des signaux de réponse formant un flux vidéo comprenant une succession d'images. L'invention concerne également un dispositif d'étalonnage et un système d'imagerie comprenant un tel dispositif d'étalonnage.

L'invention trouve une application particulière dans le domaine des dispositifs d'imagerie, notamment à une calibration automatique de non-uniformités des photodétecteurs d'un même capteur.

## ÉTAT DE LA TECHNIQUE ANTÉRIEUR

Il est connu de réaliser des dispositifs d'imagerie, tels que des caméras, intégrant au moins une matrice de photodétecteurs, également dénommée par le terme capteur par la suite.

Dans une telle matrice de photodétecteurs, en particulier lorsqu'elle est destinée à l'imagerie dans le domaine spectral de l'infrarouge lointain, un signal de réponse de chaque photodétecteur, également dénommé pixel, n'est pas uniforme à une même intensité optique d'entrée. Ceci est, par exemple, le cas dans une matrice de photodétecteurs pour une caméra infrarouge non refroidie, également dénommé par l'acronyme LWIR pour « *LongWave InfraRed* » en anglais signifiant infrarouge à grande longueur d'onde.

Pour obtenir une image exploitable à partir du signal de réponse délivré par une telle matrice de photodétecteurs, une correction des non-uniformités des pixels est requise. Ceci est, notamment, réalisé en appliquant, indépendamment pour chaque pixel, une correction en décalage, également dénommé « *offset* » en anglais, et/ou en gain.

La correction en gain est classiquement réalisée à l'aide d'une table de gain, dans laquelle chaque pixel est associé à un gain respectif. Une telle table de gain dépend essentiellement des optiques d'entrée du dispositif d'imagerie et reste sensiblement constante tout au long de la vie du dispositif d'imagerie.

Par conséquent, il est opportun d'estimer la table de gain une seule fois, notamment à l'issue de l'assemblage du dispositif d'imagerie, par exemple en usine.

En revanche, le décalage propre à chaque pixel dépend de nombreux facteurs évoluant au cours du temps, parmi lesquels la température ambiante et le vieillissement du capteur. Par conséquent, le recours à une table de décalage invariante dans le temps n'est pas opportun.

Pour surmonter un tel problème, différents procédés de correction ont été envisagés.

Par exemple, il a été proposé de réaliser, régulièrement dans le temps, une calibration dite « à un point ». Une telle calibration à un point consiste à générer mécaniquement, en particulier au moyen d'un cache ou d'une défocalisation des optiques d'entrée du dispositif d'imagerie, une scène homogène afin d'estimer le défaut de décalage de chaque pixel. Une nouvelle table de décalage, conduisant à une image corrigée également homogène, en est alors déduite. Dans un tel cas, la table de décalage obtenue est utilisée sans modification jusqu'à la calibration suivante.

En outre, lorsque le dispositif d'imagerie, ou son protocole d'utilisation, n'autorise pas la création d'une scène homogène, il est connu d'effectuer une calibration en temps réel en utilisant une information relative à une température du capteur. Une telle calibration en temps réel, également dénommée correction de non-uniformité photométrique, consiste à modéliser le défaut de décalage par un polynôme de la température du capteur, par exemple un polynôme de degré 3, la température étant mesurée par un capteur thermique positionné à proximité du capteur.

Néanmoins, de tels procédés de calibration ne donnent pas entière satisfaction. En effet, la calibration à un point entraîne une coupure du flux vidéo délivré par le dispositif d'imagerie à chaque fois qu'elle est mise en oeuvre. En outre, dans certains cas d'utilisation, une telle calibration conserve un défaut résiduel. En outre, la correction de non-uniformité photométrique ne permet de corriger que la contribution de la température au défaut de décalage.

Un but de l'invention est donc de proposer un procédé d'étalonnage qui soit exploitable en temps réel, qui nécessite peu de ressources de calcul et qui puisse être mis en oeuvre sur tout type de scène, qu'elle soit fixe ou qu'elle comporte du mouvement.

Par exemple, la demande de brevet américaine US2018352174 A1 divulgue un procédé d'étalonnage en temps réel.

## EXPOSÉ DE L'INVENTION

A cet effet, l'invention a pour objet un procédé de d'étalonnage du type précité, comprenant :

- une étape de détermination, dans laquelle, pour chaque image courante du flux vidéo, est déterminée une table de décalage à partir d'au moins deux corrections parmi :

  • une première correction, à partir d'une comparaison de l'image courante avec une table de référence correspondante parmi au moins une table de décalage de référence prédéterminée associée à la matrice de photodétecteurs ;
  • une deuxième correction, à partir d'un calcul d'un défaut de colonage de l'image courante; et
  • une troisième correction, à partir d'un filtrage temporel des hautes fréquences spatiales de l'image courante du flux vidéo ;

- une étape de calcul, dans laquelle est calculée une valeur courante d'une table de décalage, égale à une somme entre, d'une part, une valeur précédente de la table de décalage et, d'autre part, une somme pondérée des au moins deux corrections, chaque coefficient de la table de décalage étant associé à un photodétecteur respectif de la matrice de photodétecteurs.

En effet, dans un tel procédé, le calcul de la première correction à partir d'une table de référence évite le recours à une optimisation d'une somme pondérée de plusieurs tables de référence, qui nécessite une inversion d'une matrice de corrélation, opération à la complexité algorithmique élevée.

En outre, la deuxième correction est limitée à un défaut de colonage, c'est-à-dire un défaut sur une seule dimension de l'image courante. Par conséquent, la détermination de la deuxième correction s'affranchit du recours à une médiane temporelle classiquement utilisé, ce qui autorise une correction sur une unique image courante.

Le recours à un filtrage temporel des hautes fréquences spatiales de l'image courante permet de supprimer les défauts bidimensionnels hautes-fréquences résiduels, qui n'auraient pas été supprimés par la première et/ou la deuxième correction, évitant ainsi une incrustation des bords des objets présents dans la scène.

Enfin, les première, deuxième et troisième corrections se rapportent à des défauts complémentaires dans le flux vidéo, de sorte que lesdites corrections n'interfèrent pas entre elles.

Suivant d'autres aspects avantageux de l'invention, le procédé d'étalonnage comporte une ou plusieurs des caractéristiques suivantes, prise(s) isolément ou suivant toutes les combinaisons techniquement possibles :

- la première correction, à un instant de calcul donné quelconque associé à l'image courante du flux vidéo, est déterminée selon la loi:

$$\delta_{CBM}(k) = \alpha_k * T_{R,k}$$

où $\delta_{CBM}(k)$ est la valeur courante de la première correction à l'instant de calcul k;
$T_{R,k}$ est la table de décalage de référence mise en oeuvre à l'instant de calcul k ; et
$\alpha_k$ est un premier facteur de pondération, compris entre 0 et 1, à l'instant de calcul k ;

- le premier facteur de pondération est déterminé selon la loi :

$$\alpha_k = \frac{\langle F_1(T_{R,k}) | F_1(I_{k-1}) \rangle}{\langle F_1(T_{R,k}) | F_1(T_{R,k}) \rangle}$$

où <|> est le produit scalaire canonique ;
$F_1$ est un premier filtre passe-haut prédéterminé ; et
$I_{k-1}$ est une image antérieure à l'image courante ;

- la deuxième correction, à un instant de calcul donné quelconque associé à l'image courante du flux vidéo, est déterminée à partir d'un calcul d'un défaut de colonage de l'image courante, de sorte que :

 • au moins une image intermédiaire est générée; et
 • la moyenne, sur les colonnes, des gradients des lignes de l'image intermédiaire est calculée ;

- la deuxième correction est égale à une intégrale spatiale d'une moyenne, sur les colonnes d'une image courante du flux vidéo, des gradients des lignes ;
- la moyenne est une moyenne robuste, obtenue à partir des valeurs de gradient se trouvant dans un intervalle de confiance prédéterminé ;
- la troisième correction, à un instant de calcul donné quelconque à partir de l'image courante du flux vidéo, est déterminée selon la loi :

$$\delta_{WHF}(k) = \gamma * F_{sat}(F_{seuil}(F_2(I_k)))$$

où $\delta_{WHF}(k)$ est la valeur de la troisième correction associée à l'instant k ;
$\gamma$ est un troisième facteur de pondération prédéterminé ;
$F_{sat}$ est une fonction de saturation prédéterminée ;
$F_{seuil}$ est une fonction de seuillage prédéterminée ; et
$F_2$ est un deuxième filtre spatial passe-haut prédéterminé ;

- le deuxième filtre spatial passe-haut comprend un filtre-ligne configuré pour agir sur les lignes de l'image courante, et un filtre-colonne configuré pour agir sur les colonnes de l'image courante et le procédé comprend la mise en oeuvre du filtre-ligne et/ou du filtre-colonne en fonction d'un résultat d'une estimation d'un mouvement dans le flux vidéo ;
- le flux vidéo est obtenu par l'application, aux signaux de réponse, d'une calibration à un point et/ou d'une correction de non-uniformité photométrique ;
- le calcul de la troisième correction est précédé de l'application d'une correction de pixels défectueux au flux vidéo ;

- le procédé comprend, en outre, la mise en oeuvre de la valeur courante de la table de décalage pour corriger le flux vidéo afin de délivrer un flux vidéo corrigé.

En outre, l'invention a pour objet un dispositif d'étalonnage d'une matrice de photodétecteurs fournissant un ensemble des signaux de réponse formant un flux vidéo comprenant une succession d'images, le dispositif d'étalonnage comportant un étage de calcul de décalage comprenant au moins deux parmi :

- un organe de correction sur la base de tables de référence ;
- un organe de correction sur la base de la morphologie de l'image ; et
- un organe de correction sur la base du mouvement de la scène, afin de traiter le flux vidéo.

Suivant d'autres aspects avantageux de l'invention, le dispositif d'étalonnage comporte une ou plusieurs des caractéristiques suivantes, prise(s) isolément ou suivant toutes les combinaisons techniquement possibles :

- l'organe de correction sur la base de tables de référence est apte à déterminer, pour chaque image courante du flux vidéo, une première correction, à partir d'une comparaison de l'image courante avec une table de référence correspondante parmi au moins une table de décalage de référence prédéterminée associée à la matrice de photodétecteurs ;
- la première correction, à un instant de calcul donné quelconque associé à l'image courante du flux vidéo, est déterminée selon la loi :

$$\delta_{CBM}(k) = \alpha_k * T_{R,k}$$

où $\delta_{CBM}(k)$ est la valeur courante de la première correction à l'instant de calcul k;
$T_{R,k}$ est la table de décalage de référence mise en oeuvre à l'instant de calcul k ; et
$\alpha_k$ est un premier facteur de pondération, compris entre 0 et 1, à l'instant de calcul k ;

- le premier facteur de pondération est déterminé selon la loi :

$$\alpha_k = \frac{\langle F_1(T_{R,k}) | F_1(I_{k-1}) \rangle}{\langle F_1(T_{R,k}) | F_1(T_{R,k}) \rangle}$$

où <|> est le produit scalaire canonique ;
$F_1$ est un premier filtre passe-haut prédéterminé ; et
$I_{k-1}$ est une image antérieure à l'image courante ;

- l'organe de correction sur la base de la morphologie de l'image est apte à déterminer, pour chaque image courante d'un flux vidéo, une deuxième correction, à partir d'un calcul d'un défaut de colonage de l'image courante ;
- l'organe de correction sur la base de la morphologie de l'image est configuré, pour chaque image courante associée à un instant de calcul donné quelconque, de sorte que :

  • au moins une image intermédiaire est générée ; et
  • la moyenne, sur les colonnes, des gradients des lignes de l'image intermédiaire est calculée ;

- l'organe de correction sur la base du mouvement de la scène est apte à déterminer, pour chaque image courante d'un flux vidéo, une troisième correction, à partir d'un filtrage temporel des hautes fréquences spatiales de l'image courante du flux vidéo ;
- la troisième correction, à un instant de calcul donné quelconque à partir de l'image courante du flux vidéo, est déterminée selon la loi :

$$\delta_{WHF}(k) = \gamma * F_{sat}(F_{seuil}(F_2(I_k)))$$

où $\delta_{WHF}(k)$ est la valeur de la troisième correction associée à l'instant k ;
y est un troisième facteur de pondération prédéterminé ;
$F_{sat}$ est une fonction de saturation prédéterminée ;
$F_{seuil}$ est une fonction de seuillage prédéterminée ; et
$F_2$ est un deuxième filtre spatial passe-haut prédéterminé ;

- le deuxième filtre spatial passe-haut comprend un filtre-ligne configuré pour agir sur les lignes de l'image courante, et un filtre-colonne configuré pour agir sur les colonnes de l'image courante ;
- le dispositif d'étalonnage comprend une chaîne de traitement configurée pour recevoir une table de décalage calculée par l'étage de calcul de décalage afin de traiter et/ou corriger le flux vidéo ;
- le dispositif d'étalonnage comprend un organe estimateur de mouvement configuré pour comparer un gradient spatial et un gradient temporel des images et de fournir, en sortie, une information relative à une direction de mouvement dans l'image courante.

L'invention a également pour objet un système d'imagerie comprenant un dispositif d'imagerie et un dispositif d'étalonnage tel que défini ci-dessus.
Suivant d'autres aspects avantageux de l'invention, le système d'imagerie comporte une ou plusieurs des caractéristiques suivantes, prise(s) isolément ou suivant toutes les combinaisons techniquement possibles :

- le dispositif d'étalonnage est relié en sortie du dispositif d'imagerie ;
- le dispositif d'imagerie comprend une matrice de photodétecteurs configurée pour délivrer des signaux de réponse de la matrice de photodétecteurs à destination du dispositif d'étalonnage.

**BRÈVE DESCRIPTION DES DESSINS**

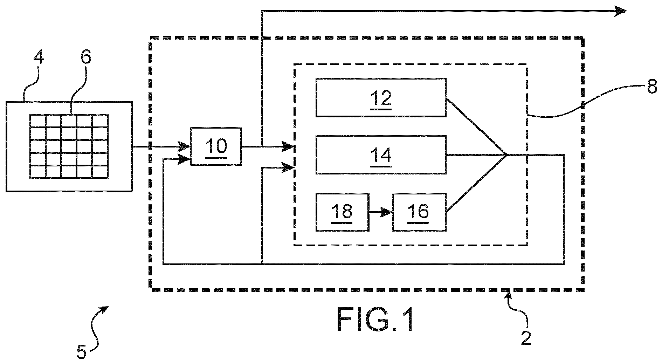

L'invention sera mieux comprise et d'autres caractéristiques et avantages apparaîtront encore à la lecture de la description détaillée qui suit comprenant des modes de réalisation donnés à titre illustratif en référence avec les figures annexées, présentés en tant qu'exemples non limitatifs, qui pourront servir à compléter la compréhension de l'invention et l'exposé de sa réalisation et, le cas échéant, contribuer à sa définition, sur lesquelles : la figure 1 est une représentation schématique d'un dispositif d'étalonnage selon l'invention.

**DESCRIPTION DÉTAILLÉE**

Un dispositif d'étalonnage 2 selon l'invention est illustré par la figure 1 qui en est une représentation schématique. Le dispositif d'étalonnage 2 est relié à une sortie d'un dispositif d'imagerie 4. Le dispositif d'étalonnage 2 est apte à recevoir un flux vidéo délivré par le dispositif d'imagerie 4. Par exemple, le dispositif d'étalonnage 2 et le dispositif d'imagerie 4 sont intégrés dans un même système d'imagerie 5.

Le dispositif d'imagerie 4 comprend au moins un photodétecteur fournissant un signal de réponse. Avantageusement, le dispositif d'imagerie 4 comprend plusieurs photodétecteurs. Dans un tel agencement, les photodétecteurs sont disposés selon une matrice 6 de photodétecteurs du dispositif d'imagerie 4.

Le dispositif d'étalonnage 2 est configuré pour déterminer un défaut, en particulier un défaut de décalage, affectant au moins un pixel de la matrice 6 de photodétecteurs du dispositif d'imagerie 4.

Les photodétecteurs de la matrice 6 fournissent un ensemble des signaux de réponse. L'ensemble des signaux de réponse fournis par les photodétecteurs de la matrice 6 forme le flux vidéo délivré par le dispositif d'imagerie 4. De façon connue, un tel flux vidéo comprend une succession d'images dans le temps, également dénommée scène.

Le dispositif d'étalonnage 2 comporte un étage de calcul de décalage 8 et une chaîne de traitement 10, également dénommée étage de traitement 10, apte à assurer un traitement du flux vidéo.

L'étage de calcul de décalage 8 est configuré pour calculer une table de décalage associée à la matrice 6, notamment à partir du flux vidéo. Avantageusement, la table de décalage associée à la matrice 6 comporte au moins un coefficient. En particulier, la table de décalage associée à la matrice 6 comporte une pluralité de coefficients. Dans un tel cas, il est privilégié que chaque coefficient de la table de décalage soit associé à un photodétecteur respectif de la matrice 6. Plus spécifiquement, le coefficient intervient dans une correction du signal de réponse du photodétecteur correspondant.

Comme cela ressortira de la description qui va suivre, l'étage de calcul de décalage 8 est adapté pour réaliser un calcul en temps réel. L'étage de calcul de décalage 8 met également en oeuvre, à un instant de calcul k quelconque donné, les valeurs antérieures de la table de décalage.

Selon l'invention, la chaîne de traitement 10 est configurée pour recevoir la table de décalage calculée par l'étage de calcul de décalage 8 afin de traiter le flux vidéo délivré par le dispositif d'imagerie 4.

L'étage de calcul de décalage 8 comprend au moins deux parmi :

- un organe de correction sur la base de tables de référence 12;
- un organe de correction sur la base de la morphologie de l'image 14 ; et
- un organe de correction sur la base du mouvement de la scène 16.

Plus particulièrement, l'organe de correction sur la base du mouvement de la scène 16 est relié à une sortie d'un organe estimateur de mouvement 18. Préférentiellement, l'organe estimateur de mouvement 18 est intégré dans l'étage de calcul de décalage 8.

Par la suite, l'organe de correction sur la base de tables de référence 12 pourra également être appelé organe CBM 12, l'acronyme « CBM » étant pour « CoBalt Multi », « CoBalt » signifiant « COmBinAison Linéaire de Tables ». Il est à noter que l'organe de correction sur la base de tables de référence 12 est également dénommé organe CIT, l'acronyme « CIT » étant pour « Combinaison Itératives de Tables ».

De même, par la suite, l'organe de correction sur la base de la morphologie de l'image 14 pourra également être appelé organe W1D 14, l'acronyme « W1D » étant pour « Weiss uni-Dimensionnel ».

Enfin, par la suite, l'organe de correction sur la base du mouvement de la scène 16 pourra être appelé organe WHF 16, l'acronyme « WHF » étant pour « Weiss Hautes Fréquences ».

Selon la configuration illustrée, l'organe de correction sur la base de tables de référence 12, l'organe de correction sur la base de la morphologie de l'image 14 et l'organe de correction sur la base du mouvement de la scène 16 sont configurés pour fonctionner en parallèle. Notamment, l'organe de correction sur la base de tables de référence 12, l'organe de correction sur la base de la morphologie de l'image 14 et l'organe de correction sur la base du mouvement de la scène 16 sont aptes à calculer chacun une correction correspondante respectivement.

En outre, la valeur courante de la table de décalage délivrée par l'étage de calcul de décalage 8 à un instant de calcul k donné quelconque est égale à la valeur de la table de décalage à l'instant de calcul k-1 précédent, à laquelle est ajoutée une somme, de préférence pondérée, des corrections calculées respectivement par l'organe de correction sur la base de tables de référence 12, l'organe de correction sur la base de la morphologie de l'image 14 et/ou l'organe de correction sur la base du mouvement de la scène 16 pour l'instant de calcul k courant.

Comme cela ressortira de ce qui suit, l'organe de correction sur la base de tables de référence 12, l'organe de correction sur la base de la morphologie de l'image 14 et/ou l'organe de correction sur la base du mouvement de la scène 16 sont configurés pour corriger des défauts complémentaires dans le flux vidéo, de sorte que les corrections qu'ils délivrent n'interfèrent pas entre elles.

L'organe de correction sur la base de tables de référence 12, ou organe CBM 12, est configuré pour déterminer un défaut de décalage, notamment une composante principale du défaut de décalage. Par composante principale, il est entendu, au sens de l'invention, une composante pouvant être initialement calculée à partir d'une table de calibration. La table de calibration peut être établie une unique fois, notamment en usine, pour la durée de vie du dispositif d'imagerie 4 et/ou du système d'imagerie 5.

Plus précisément, l'organe CBM 12 est configuré pour recevoir le flux vidéo délivré par le dispositif d'imagerie 4 et donc pour déterminer une première correction $\delta_{CBM}$ à partir du flux vidéo et d'un ensemble de tables de référence, de préférence un ensemble de tables de référence prédéterminées.

Les tables de référence sont, par exemple, enregistrées dans le dispositif d'étalonnage 2 lors d'une étape de configuration préalable, par exemple à l'issue de l'assemblage du système d'imagerie 5, notamment en usine.

Le fonctionnement de l'organe CBM 12 repose sur une comparaison des hautes fréquences des images du flux vidéo avec les tables de référence.

Plus précisément, l'organe CBM 12 est configuré pour déterminer, à l'instant de calcul k donné quelconque, à partir d'une image du flux vidéo, également dénommée image courante $I_k$, la première correction $\delta_{CBM}$ selon la loi :

$$\delta_{CBM}(k) = \alpha_k * T_{R,k}$$

où $\delta_{CBM}(k)$ est la valeur de la première correction à l'instant de calcul k ;
$T_{R,k}$ est la table de décalage de référence mise en oeuvre à l'instant de calcul k ; et
$\alpha_k$ est un premier facteur de pondération, compris entre 0 et 1, à l'instant de calcul k.

La table de décalage de référence $T_{R,k}$ est injectée successivement dans la fonction CBM 12. Dans le cas d'un ensemble de N tables de référence indexées par un entier P, la table de référence d'indice P sera injectée à l'instant k, où P = mod(k, N), c'est-à-dire k modulo N.

Le premier facteur de pondération $\alpha_k$ est calculé à partir de l'image antérieure $I_{k-1}$ à l'image courante $I_k$ selon la loi :

$$\alpha_k = \frac{\langle F_1(T_{R,k}) | F_1(I_{k-1}) \rangle}{\langle F_1(T_{R,k}) | F_1(T_{R,k}) \rangle}$$

où $<|>$ est le produit scalaire canonique ;
$F_1$ est un premier filtre passe-haut prédéterminé ; et
$I_{k-1}$ est l'image antérieure à l'image courante $I_k$.

Pour la table de référence $T_{R,k}$ mise en oeuvre à l'instant de calcul k, le calcul du premier facteur de pondération $\alpha_k$ est préférentiellement effectué à l'instant précédent k-1, notamment pour des raisons matérielles de gestion du flux vidéo.

De telles caractéristiques de l'organe CBM 12 sont particulièrement avantageuses. En effet, la détermination de la première correction $\delta_{CBM}$ met en oeuvre un simple produit scalaire canonique qui est une opération nécessitant peu de ressources de calcul.

A l'inverse, un calcul qui viserait à optimiser une somme pondérée de plusieurs tables de référence en vue d'obtenir une table de décalage à partir d'une seule image courante $I_k$, nécessiterait une inversion d'une matrice de corrélation des tables de référence et de l'image courante $I_k$, ce qui implique une complexité algorithmique élevée.

Grâce à un tel organe CBM 12, la première correction $\delta_{CBM}$ tend à converger, c'est-à-dire à tendre vers zéro, rapidement, notamment en quelques dizaines d'images, typiquement entre 20 et 50 images. L'organe CBM 12 présente donc l'avantage particulier que l'ensemble de tables de référence converge bien vers la table de décalage.

Le fonctionnement itératif peut engendrer, à travers la quantification imposée par un circuit logique programmable, tel qu'un FPGA, acronyme pour « *field-programmable gate array* » en anglais signifiant réseau de portes programmables in situ, un bruit de quantification divergent.

Avantageusement, pour prévenir ces complications relatives au fonctionnement itératif de l'organe CBM 12, des stratégies de quantification adaptées sont implémentées dans l'étage de calcul de décalage 8. En particulier, une stratégie de quantification basée sur une quantification aléatoire et une mise à zéro du premier facteur de pondération $\alpha_k$ pour les valeurs les plus faibles est implémentée dans l'étage de calcul de décalage 8.

L'image courante $I_k$ étant la résultante de l'ensemble des signaux de réponse fournis par les photodétecteurs de la matrice 6, il s'en suit que l'image courante $I_k$ est à deux dimensions constituée de colonnes et de lignes.

L'organe de correction sur la base de la morphologie de l'image 14, ou organe W1D 14, est configuré pour déterminer un défaut de colonage. Par défaut de colonage, il est entendu un bruit corrélé sur les colonnes de l'image courante $I_k$. Un défaut de colonage se traduit par une même valeur de bruit ajoutée aux valeurs des pixels d'une colonne donnée de l'image courante.

Plus précisément, l'organe W1D 14 est configuré pour calculer, pour chaque image courante $I_k$, une moyenne sur les colonnes des gradients des lignes. En outre, l'organe W1D 14 est configuré pour obtenir le défaut de colonage par intégration spatiale de la moyenne ainsi calculée. L'organe W1D 14 est configuré donc pour déterminer une deuxième correction $\delta_{W1D}$. Plus particulièrement, l'organe W1D 14 calcule une intégrale spatiale de la moyenne sur les colonnes de l'image courante $I_k$ du flux vidéo des gradients des lignes.

De préférence, une telle moyenne est une moyenne robuste. Par moyenne robuste, il est entendu une moyenne obtenue uniquement à partir de valeurs de gradient se trouvant dans un intervalle de tolérance prédéterminé. Selon l'invention, les gradients, pour chaque photodétecteur ou pixel, sont comparés à un intervalle de confiance commun à toute l'image $I_k$.

De telles caractéristiques de l'organe W1D 14 sont particulièrement avantageuses. En effet, l'utilisation de la moyenne robuste autorise une estimation du défaut de colonage sur des zones de confiance uniquement. Ceci permet donc une réduction du risque d'incrustation de scène, en particulier lorsque l'image courante $I_k$ comprend un objet allongé.

En outre, l'estimation d'un défaut de colonage repose théoriquement sur un calcul de médiane. Le recours à une moyenne robuste conduit à une estimation satisfaisante de cette médiane. Cela permet donc de s'affranchir du calcul de cette dernière, ce qui limite les ressources de calcul mobilisées.

Par ailleurs, bien que le calcul mis en oeuvre par l'organe W1D 14 selon l'invention limite la correction à un défaut de colonage, c'est-à-dire un défaut sur une seule dimension de l'image courante $I_k$, la détermination du défaut de colonage, donc de la deuxième correction $\delta_{W1D}$, s'affranchit du recours à une médiane temporelle classiquement utilisé. Ceci présente notamment l'avantage d'autoriser une correction sur une unique image courante $I_k$.

Avantageusement, l'organe W1D 14 est configuré, pour chaque image courante $I_k$ associée à un instant de calcul k donné quelconque, de sorte que :

- au moins une image intermédiaire, avantageusement une pluralité d'images intermédiaires, est générée ; et
- la moyenne, sur les colonnes, des gradients des lignes de l'image intermédiaire, avantageusement de chaque image intermédiaire, est calculée.

En particulier, l'image intermédiaire peut être obtenue en réduisant la taille de l'image courante $I_k$ par un facteur de réduction correspondant, par exemple $2^i$ où i est un entier naturel quelconque.

Les calculs effectués sur les différentes images intermédiaires sont interpolés, notamment par une mise à la taille d'origine, puis sommés. Afin d'assurer qu'il n'y ait pas une sur-correction, c'est à dire une redondance d'information entre les différentes images intermédiaires, l'organe W1D 14 permet un fonctionnement itératif. Ainsi, à chaque image, une seule échelle est calculée. Ceci présente l'avantage d'augmenter la vitesse de convergence qui peut être limitée par le calcul de la moyenne robuste.

En outre, dans ce cas, l'organe W1D 14 est, de préférence, configuré pour retenir, en tant que valeur basse fréquence du défaut de colonage, la valeur obtenue en intégrant les moyennes robustes des gradients de la plus petite image intermédiaire qui n'est pas constituée d'un unique pixel. La valeur basse fréquence du défaut de colonage permet d'estimer et de corriger un effet de halo, souvent présent sur les caméras infrarouges.

Grâce à un tel organe W1D 14, la deuxième correction $\delta_{W1D}$ tend à converger, c'est-à-dire à tendre vers zéro, rapidement, notamment en quelques dizaines d'images, typiquement entre 20 à 50 images.

L'organe de correction sur la base du mouvement de la scène 16, ou organe WHF 16, est configuré pour déterminer un défaut bidimensionnel hautes fréquences résiduel, respectivement des défauts bidimensionnel hautes fréquences résiduels, pour lequel, respectivement lesquels, l'organe CBM 12 et l'organe W1D 14 ne sont pas susceptibles de fournir de correction appropriée, notamment lorsque la scène est en mouvement. En effet, ceux-ci sont limités par nature aux défauts présents dans la table de calibration et aux défauts unidimensionnels.

Grâce à l'organe WHF 16, il est alors possible, notamment lorsque la scène est en mouvement, d'affiner la qualité et la précision du calcul de la table de décalage.

En particulier, l'organe WHF 16 est configuré pour réaliser un filtrage temporel robuste des hautes fréquences spatiales de l'image courante $I_k$. L'organe WHF 16 réalise tout d'abord un filtrage spatial passe-haut de l'image courante $I_k$ pour isoler les hautes fréquences spatiales de l'image, qui comportent à la fois des hautes fréquences de bruit et des hautes fréquences de la scène. L'organe WHF 16 réalise ensuite un filtrage temporel de ces hautes fréquences spatiales pour séparer les hautes fréquences de bruit, fixe dans le temps, et les hautes fréquences de la scène, dont la moyenne temporelle est nulle. L'organe WHF 16 permet ainsi de supprimer les défauts bidimensionnels hautes-fréquences résiduels. L'organe WHF 16 est donc configuré pour déterminer une troisième correction $\delta_{WHF}$.

Selon l'invention, le filtrage temporel robuste des hautes fréquences spatiales de l'image courante $I_k$ est obtenu en seuillant les hautes fréquences spatiales pour réduire la contribution des hautes fréquences spatiales à la table de décalage calculée par l'étage de calcul de décalage 8 afin de traiter le flux vidéo délivré par le dispositif d'imagerie 4.

Plus précisément, l'organe WHF 16 est configuré pour déterminer, à l'instant de calcul k donné quelconque, à partir de l'image courante $I_k$ du flux vidéo, la troisième correction $\delta_{WHF}$ selon la loi :

$$\delta_{WHF}(k) = \gamma * F_{sat}(F_{seuil}(F_2(I_k)))$$

où $\delta_{WHF}(k)$ est la valeur de la troisième correction à l'instant de calcul k ;

y est un troisième facteur de pondération prédéterminé ;

$F_{sat}$ est une fonction de saturation prédéterminée ;

$F_{seuil}$ est une fonction de seuillage prédéterminée ; et

$F_2$ est un deuxième filtre spatial passe-haut prédéterminé.

Le filtrage temporel est réalisé par l'application du troisième facteur de pondération prédéterminé $\gamma$. Le troisième facteur de pondération prédéterminé y permet de moyenner dans le temps les hautes fréquences spatiales filtrées. Le troisième facteur de pondération y est compris entre 0 et 1.

Ceci a pour effet de prévenir une incrustation des bords des objets qui contiennent des hautes fréquences spatiales indépendantes du défaut de décalage dans l'image courante $I_k$ lors de son traitement. Ceci est obtenu par l'intermédiaire de la fonction de seuillage et la fonction de saturation qui préviennent une telle incrustation des bords des objets. Le troisième facteur de pondération y joue un rôle de moyenne temporelle.

De préférence, le deuxième filtre spatial passe-haut $F_2$ peut comprendre un filtre passe-haut agissant sur les lignes de l'image courante $I_k$, également dénommé filtre-ligne, et/ou un filtre passe-haut agissant sur les colonnes de l'image courante $I_k$, également dénommé filtre-colonne. Préférentiellement, le filtre-ligne et le filtre-colonne sont indépendants. Par ailleurs, le filtre-ligne et le filtre-colonne sont activés en fonction d'une sortie de l'organe estimateur de mouvement 18.

L'activation découplée du filtre-ligne et du filtre-colonne est destinée à réduire de potentielles incrustations de scène lors de mouvements rectilignes horizontaux ou verticaux dans le flux vidéo.

L'organe estimateur de mouvement 18 est configuré pour comparer un gradient spatial et un gradient temporel des images et pour fournir, en sortie, une information relative à une direction de mouvement dans l'image courante $I_k$. L'organe estimateur de mouvement 18 donne une information de présence ou d'absence de mouvement sur l'axe horizontal, ou ligne, et sur l'axe vertical, ou colonne.

La sortie de l'organe estimateur de mouvement 18 conditionne une mise en opération de l'organe WHF 16. En outre, la sortie de l'organe estimateur de mouvement 18 conditionne si le filtre-ligne et/ou le filtre-colonne est activé lors du calcul de la troisième correction $\delta_{WHF}$ par l'organe WHF 16.

Grâce à un tel organe WHF 16, la troisième correction $\delta_{WHF}$ tend à converger, c'est-à-dire à tendre vers zéro, rapidement, notamment en quelques centaines d'images, les performances étant d'autant meilleures que le mouvement dans la scène est important.

Il ressort de ce qui précède que la détermination de la table de décalage par l'étage de calcul de décalage 8 se fait de façon itérative, sa valeur étant affinée au cours du temps. Par conséquent, le calcul de la table de décalage nécessite peu de ressources de calcul.

En outre, l'utilisation de facteurs de pondération, tel que le premier facteur de pondération $\alpha_k$ ou le troisième facteur de pondération prédéterminé y, dont la somme est inférieure à 1, dans le calcul de la somme pondérée de la première correction $\delta_{CBM}$, de la deuxième correction $\delta_{W1D}$ et/ou de la troisième correction $\delta_{WHF}$ sur les sorties de l'organe CBM 12, de l'organe W1D 14 et de l'organe WHF 16 assure la convergence de l'ensemble.

La chaîne de traitement 10 est configurée pour recevoir le flux vidéo délivré par le dispositif d'imagerie 4 et pour le corriger au moyen de la valeur courante de la table de décalage calculée par l'étage de calcul de décalage 8.

Le flux vidéo disponible en sortie de la chaîne de traitement 10 forme un flux vidéo corrigé. Ainsi, du fait de la configuration de l'étage de calcul de décalage 8, un tel traitement conduit à une amélioration incrémentale de la qualité d'image dans le flux vidéo.

De préférence, la chaîne de traitement 10 est configurée pour mettre en oeuvre une calibration à un point et/ou une correction de non-uniformité photométrique pour réaliser un prétraitement du flux vidéo, en vue d'obtenir un flux vidéo prétraité. Dans ce cas, le flux vidéo après mise en oeuvre de la calibration à un point et/ou de la correction de non-uniformité photométrique forme le flux vidéo appliqué en entrée de l'étage de calcul de décalage 8 en vue de déterminer la table de décalage.

De préférence encore, l'étage de traitement 10 est configuré pour réaliser une correction des pixels défectueux dans le flux vidéo. Dans ce cas, le flux vidéo obtenu après mise en oeuvre de la correction de pixels défectueux forme le flux vidéo appliqué en entrée de l'organe WHF 16 et de l'organe estimateur de mouvement 18 pour la détermination de la troisième correction $\delta_{WHF}$.

En fonctionnement, le dispositif d'imagerie 4 délivre un flux vidéo à destination du dispositif d'étalonnage 2. A un instant de calcul k donné quelconque, l'étage de calcul de décalage 8 détermine la valeur courante de la table de décalage à partir de la valeur précédente de la table de décalage et de la correction calculée par l'organe CBM 12, l'organe W1D 14 et/ou l'organe WHF 16 à partir du flux vidéo, notamment à partir de l'image courante $I_k$.

La chaîne de traitement 10 applique alors, à chaque pixel de l'image courante $I_k$, une correction à partir du coefficient correspondant de la table de décalage courante délivrée par l'étage de calcul de décalage 8, afin de délivrer le flux vidéo corrigé.

## Revendications

1. Procédé d'étalonnage d'une matrice (6) de photodétecteurs fournissant un ensemble des signaux de réponse formant un flux vidéo comprenant une succession d'images courantes ($I_k$), comprenant :

    - une étape de détermination, dans laquelle, pour chaque image courante ($I_k$) du flux vidéo, est déterminée une table de décalage à partir d'au moins deux corrections parmi :

        • une première correction ($\delta_{CBM}(k)$), à partir d'une comparaison de l'image antérieure à l'image courante ($I_k$) avec une table de référence correspondante parmi au moins une table de décalage de référence prédéterminée associée à la matrice (6) de photodétecteurs ;
        • une deuxième correction ($\delta_{W1D}$), à partir d'un calcul d'un défaut de colonage de l'image courante ($I_k$); et
        • une troisième correction ($\delta_{WHF}(k)$) ;

    - une étape de calcul, dans laquelle est calculée une valeur courante d'une table de décalage, égale à une somme entre, d'une part, une valeur précédente de la table de décalage et, d'autre part, une somme pondérée des au moins deux corrections, chaque coefficient de la table de décalage étant associé à un photodétecteur respectif de la matrice (6) de photodétecteurs,

    **caractérisé en ce que** :

        • la première correction ($\delta_{CBM}(k)$), à un instant de calcul (k) donné quelconque associé à l'image courante ($I_k$) du flux vidéo, est déterminée selon la loi :

        $$\delta_{CBM}(k) = \alpha_k * T_{R,k}$$

où $\delta_{CBM}(k)$ est la valeur courante de la première correction à l'instant de calcul k ;
$T_{R,k}$ est la table de décalage de référence mise en oeuvre à l'instant de calcul k ; et
$\alpha_k$ est un premier facteur de pondération, compris entre 0 et 1, à l'instant de calcul,

• le premier facteur de pondération ($\alpha_k$) est déterminé selon la loi :

$$\alpha_k = \frac{\langle F_1(T_{R,k}) | F_1(I_{k-1}) \rangle}{\langle F_1(T_{R,k}) | F_1(T_{R,k}) \rangle}$$

où $\langle | \rangle$ est le produit scalaire canonique ;
$F_1$ est un premier filtre passe-haut prédéterminé ; et
$I_{k-1}$ est une image antérieure à l'image courante ($I_k$),

• la deuxième correction ($\delta_{W1D}$), à un instant de calcul (k) donné quelconque associé à l'image courante ($I_k$) du flux vidéo, est déterminée à partir d'un calcul d'un défaut de colonage de l'image courante ($I_k$), de sorte que :

    - au moins une image intermédiaire est générée en réduisant la taille de l'image courante ($I_k$) par un facteur de réduction; et
    - la moyenne, sur les colonnes, des gradients des lignes de l'image intermédiaire est calculée,

• la troisième correction ($\delta_{WHF}(k)$), à un instant de calcul (k) donné quelconque associé à l'image courante ($I_k$) du flux vidéo, est déterminée selon la loi :

$$\delta_{WHF}(k) = \gamma * F_{sat}(F_{seuil}(F_2(I_k)))$$

où $\delta_{WHF}(k)$ est la valeur de la troisième correction associée à l'instant k ;
$\gamma$ est un troisième facteur de pondération prédéterminé ;
$F_{sat}$ est une fonction de saturation prédéterminée ;
$F_{seuil}$ est une fonction de seuillage prédéterminée ; et
$F_2$ est un deuxième filtre spatial passe-haut prédéterminé.

2. Procédé d'étalonnage selon la revendication 1, **caractérisé en ce que** la deuxième correction ($\delta_{W1D}$) est égale à une intégrale spatiale d'une moyenne, sur les colonnes d'une image courante ($I_k$) du flux vidéo, des gradients des lignes.

**3.** Procédé d'étalonnage selon la revendication précédente, **caractérisé en ce que** la moyenne est une moyenne robuste, obtenue à partir des valeurs de gradient se trouvant dans un intervalle de confiance prédéterminé.

**4.** Procédé d'étalonnage selon la revendication 1, **caractérisé en ce que** le deuxième filtre spatial passe-haut ($F_2$) comprend un filtre-ligne configuré pour agir sur les lignes de l'image courante ($I_k$), et un filtre-colonne configuré pour agir sur les colonnes de l'image courante ($I_k$) et **en ce que** le procédé comprend la mise en oeuvre du filtre-ligne et/ou du filtre-colonne en fonction d'un résultat d'une estimation d'un mouvement dans le flux vidéo.

**5.** Procédé d'étalonnage selon l'une quelconque des revendications précédentes, **caractérisé en ce que** le flux vidéo est obtenu par l'application, aux signaux de réponse, d'une calibration à un point et/ou d'une correction de non-uniformité photométrique.

**6.** Procédé d'étalonnage selon l'une quelconque des revendications précédentes, **caractérisé en ce que** le calcul de la troisième correction ($\delta_{WHF}(k)$) est précédé de l'application d'une correction de pixels défectueux au flux vidéo.

**7.** Procédé d'étalonnage selon l'une quelconque des revendications précédentes, comprenant en outre la mise en oeuvre de la valeur courante de la table de décalage pour corriger le flux vidéo afin de délivrer un flux vidéo corrigé.

**8.** Dispositif d'étalonnage (2) d'une matrice (6) de photodétecteurs fournissant un ensemble des signaux de réponse formant un flux vidéo comprenant une succession d'images, comportant un étage de calcul de décalage (8) apte à déterminer une table de décalage à partir d'au moins deux corrections pour chaque image courante ($I_k$) du flux vidéo, l'étage de calcul de décalage comprenant au moins deux parmi :

    - un organe de correction sur la base de tables de référence (12) apte à déterminer, pour chaque image courante ($I_k$) du flux vidéo, une première correction ($\delta_{CBM}(k)$), à partir d'une comparaison de l'image antérieure à l'image courante ($I_k$) avec une table de référence correspondante parmi au moins une table de décalage de référence prédéterminée ($T_{R,k}$) associée à la matrice (6) de photodétecteurs ;
    - un organe de correction sur la base de la morphologie de l'image (14) apte à déterminer, pour chaque image courante ($I_k$) du flux vidéo, une deuxième correction ($\delta_{W1D}$), à partir d'un calcul d'un défaut de colonage de l'image courante ($I_k$). ; et

    - un organe de correction sur la base du mouvement de la scène (16) apte à déterminer, pour chaque image courante ($I_k$) du flux vidéo, une troisième correction ($\delta_{WHF}(k)$), à partir d'une application d'une fonction de pondération aux hautes fréquences spatiales de l'image courante du flux vidéo,

**caractérisé en ce que** :

    • la première correction ($\delta_{CBM}(k)$), à un instant de calcul (k) donné quelconque associé à l'image courante ($I_k$) du flux vidéo, est déterminée selon la loi :

$$\delta_{CBM}(k) = \alpha_k * T_{R,k}$$

    où $\delta_{CBM}(k)$ est la valeur courante de la première correction à l'instant de calcul k ;
    $T_{R,k}$ est la table de décalage de référence mise en oeuvre à l'instant de calcul k ; et
    $\alpha_k$ est un premier facteur de pondération, compris entre 0 et 1, à l'instant de calcul,

    • le premier facteur de pondération ($\alpha_k$) est déterminé selon la loi :

$$\alpha_k = \frac{\langle F_1(T_{R,k}) | F_1(I_{k-1}) \rangle}{\langle F_1(T_{R,k}) | F_1(T_{R,k}) \rangle}$$

    où $\langle | \rangle$ est le produit scalaire canonique ;
    $F_1$ est un premier filtre passe-haut prédéterminé ; et
    $I_{k-1}$ est une image antérieure à l'image courante ($I_k$),

    • la deuxième correction ($\delta_{W1D}$), à un instant de calcul (k) donné quelconque associé à l'image courante ($I_k$) du flux vidéo, est déterminée à partir d'un calcul d'un défaut de colonage de l'image courante ($I_k$), de sorte que :

        - au moins une image intermédiaire est générée en réduisant la taille de l'image courante ($I_k$) par un facteur de réduction; et
        - la moyenne, sur les colonnes, des gradients des lignes de l'image intermédiaire est calculée,

    • la troisième correction ($\delta_{WHF}(k)$), à un instant de calcul (k) donné quelconque associé à l'image courante ($I_k$) du flux vidéo, est déterminée selon la loi :

$$\delta_{WHF}(k) = \gamma * F_{sat}(F_{seuil}(F_2(I_k)))$$

où $\delta_{WHF}(k)$ est la valeur de la troisième correction associée à l'instant k ;

y est un troisième facteur de pondération prédéterminé ;

$F_{sat}$ est une fonction de saturation prédéterminée ;

$F_{seuil}$ est une fonction de seuillage prédéterminée ; et

$F_2$ est un deuxième filtre spatial passe-haut prédéterminé.

9. Dispositif d'étalonnage (2) d'une matrice (6) de photodétecteurs selon la revendication précédente, caractérisé en que le deuxième filtre spatial passe-haut ($F_2$) comprend un filtre-ligne configuré pour agir sur les lignes de l'image courante ($I_k$), et un filtre-colonne configuré pour agir sur les colonnes de l'image courante ($I_k$).

10. Dispositif d'étalonnage (2) selon la revendication 9, caractérisé en qu'il comprend une chaîne de traitement (10) configurée pour recevoir une table de décalage calculée par l'étage de calcul de décalage (8) afin de traiter et/ou corriger le flux vidéo.

11. Dispositif d'étalonnage (2) d'une matrice (6) de photodétecteurs selon l'une quelconque des revendications 8 à 10, caractérisé en qu'il comprend un organe estimateur de mouvement (18) configuré pour comparer un gradient spatial et un gradient temporel des images et de fournir, en sortie, une information relative à une direction de mouvement dans l'image courante ($I_k$).

12. Système d'imagerie (5) comprenant un dispositif d'imagerie (4) et un dispositif d'étalonnage (2) selon l'une quelconque des revendications 8 à 11, le dispositif d'étalonnage (2) étant relié en sortie du dispositif d'imagerie (4) et le dispositif d'imagerie (4) comprenant une matrice (6) de photodétecteurs configurée pour délivrer des signaux de réponse de la matrice (6) de photodétecteurs à destination du dispositif d'étalonnage (2).

**Patentansprüche**

1. Verfahren zum Eichen eines Fotodetektor-Arrays (6), das einen Satz Antwortsignale liefert, die einen Videostrom bilden, der eine Folge von aktuellen Bildern ($I_k$) umfasst, umfassend:

- einen Bestimmungsschritt, bei dem für jedes aktuelle Bild ($I_k$) des Videostroms eine Versatztabelle auf Grundlage von mindestens zwei Korrekturen bestimmt wird, aus:

-- einer ersten Korrektur ($\delta_{CBM}(k)$) auf Grundlage eines Vergleichs des vor dem aktuellen Bild ($I_k$) liegenden Bildes mit einer entsprechenden Referenztabelle aus mindestens einer vorbestimmten Referenzversatztabelle, die dem Fotodetektor-Array (6), zugeordnet ist;

-- einer zweiten Korrektur ($\delta_{W1D}$) auf Grundlage einer Berechnung eines Besiedelungsfehlers des aktuellen Bildes ($I_k$); und

-- einer dritten Korrektur ($\delta_{WHF}(k)$);

- einen Berechnungsschritt, bei dem ein aktueller Wert einer Versatztabelle berechnet wird, der gleich einer Summe zwischen einerseits einem vorhergehenden Wert der Versatztabelle und andererseits einer gewichteten Summe der mindestens zwei Korrekturen ist, wobei jeder Koeffizient der Versatztabelle einem jeweiligen Fotodetektor des Fotodetektor-Arrays (6) zugeordnet ist,

**dadurch gekennzeichnet, dass**:

• die erste Korrektur ($\delta_{CBM}(k)$) zu einem beliebigen gegebenen Berechnungszeitpunkt (k), der dem aktuellen Bild ($I_k$) des Videostroms zugeordnet ist, gemäß dem folgenden Gesetz bestimmt wird:

$$\delta_{CBM}(k) = \alpha_k * T_{R,k}$$

wobei $\delta_{CBM}(k)$ der aktuelle Wert der ersten Korrektur zum Berechnungszeitpunkt k ist; $T_{R,k}$ die Referenzversatztabelle ist, die zum Berechnungszeitpunkt k eingesetzt wird; und $\alpha_k$ ein erster Gewichtungsfaktor, im Bereich zwischen 0 und 1, zum Berechnungszeitpunkt ist,

• der erste Gewichtungsfaktor ($\alpha_k$) gemäß dem folgenden Gesetz bestimmt wird:

$$\alpha_k = \frac{\langle F_1(T_{R,k}) | F_1(I_{k-1}) \rangle}{\langle F_1(T_{R,k}) | F_1(T_{R,k}) \rangle}$$

wobei $\langle | \rangle$ das kanonische Skalarprodukt ist; $F_1$ ein erster vorbestimmter Hochpassfilter ist; und $I_{k-1}$ ein Bild ist, das vor dem aktuellen Bild ($I_k$) liegt,

- die zweite Korrektur ($\delta_{W1D}$) zu einem beliebigen gegebenen Berechnungszeitpunkt (k), der dem aktuellen Bild ($I_k$) des Videostroms zugeordnet ist, auf Grundlage einer Berechnung eines Besiedlungsfehlers des aktuellen Bildes ($I_k$) so bestimmt wird, dass:

   - mindestens ein Zwischenbild erzeugt wird, indem die Größe des aktuellen Bildes ($I_k$) um einen Reduzierungsfaktor reduziert wird; und
   - der Mittelwert, über die Spalten, der Gradienten der Zeilen des Zwischenbildes berechnet wird,

- die dritte Korrektur ($\delta_{WHF}(k)$) zu einem beliebigen gegebenen Berechnungszeitpunkt (k), der dem aktuellen Bild ($I_k$) des Videostroms zugeordnet ist, gemäß dem folgenden Gesetz bestimmt wird:

$$\delta_{WHF}(k) = \gamma * F_{Sat}(F_{Schwelle}(F_2(I_k)))$$

wobei $\delta_{WHF}(k)$ der Wert der dritten Korrektur ist, der dem Zeitpunkt k zugeordnet ist;
$\gamma$ ein dritter vorbestimmter Gewichtungsfaktor ist;
$F_{Sat}$ eine vorbestimmte Sättigungsfunktion ist;
$F_{Schwelle}$ eine vorbestimmte Schwellenwertfunktion ist; und
$F_2$ ein zweiter vorbestimmter räumlicher Hochpassfilter ist.

2. Eichverfahren nach Anspruch 1, **dadurch gekennzeichnet, dass** die zweite Korrektur ($\delta_{W1D}$) gleich einem räumlichen Integral eines Mittelwerts, über die Spalten eines aktuellen Bildes ($I_k$) des Videostroms, der Gradienten der Zeilen ist.

3. Eichverfahren nach dem vorstehenden Anspruch, **dadurch gekennzeichnet, dass** der Mittelwert ein robuster Mittelwert ist, der auf Grundlage der Gradientenwerte erhalten wird, die sich in einem vorbestimmten Konfidenzintervall befinden.

4. Eichverfahren nach Anspruch 1, **dadurch gekennzeichnet, dass** der zweite räumliche Hochpassfilter ($F_2$) einen Zeilenfilter, der so konfiguriert ist, dass er auf die Zeilen des aktuellen Bildes ($I_k$) wirkt, und einen Spaltenfilter umfasst, der so konfiguriert ist, dass er auf die Spalten des aktuellen Bildes ($I_k$) wirkt, und dadurch, dass das Verfahren den Einsatz des Zeilenfilters und/oder des Spaltenfilters in Abhängigkeit von einem Ergebnis einer Schätzung einer Bewegung im Videostrom umfasst.

5. Eichverfahren nach einem der vorstehenden Ansprüche, **dadurch gekennzeichnet, dass** der Videostrom durch das Anwenden einer Einpunktkalibrierung und/oder einer photometrischen Non-Uniformity-Korrektur auf die Antwortsignale erhalten wird.

6. Eichverfahren nach einem der vorstehenden Ansprüche, **dadurch gekennzeichnet, dass** der Berechnung der dritten Korrektur ($\delta_{WHF}(k)$) die Anwendung einer Korrektur von fehlerhaften Pixeln auf den Videostrom vorausgeht.

7. Eichverfahren nach einem der vorstehenden Ansprüche, das weiter das Einsetzen des aktuellen Werts der Versatztabelle zum Korrigieren des Videostroms umfasst, um einen korrigierten Videostrom auszugeben.

8. Vorrichtung zum Eichen (2) eines Fotodetektor-Arrays (6), das einen Satz Antwortsignale liefert, die einen Videostrom bilden, der eine Bilderfolge umfasst, eine Versatzberechnungsstufe (8) umfassend, die in der Lage ist, eine Versatztabelle auf Grundlage von mindestens zwei Korrekturen für jedes aktuelle Bild ($I_k$) des Videostroms zu bestimmen, wobei die Versatzberechnungsstufe mindestens zwei umfasst aus:

   - einem Glied zur Korrektur auf Basis von Referenztabellen (12), das in der Lage ist, für jedes aktuelle Bild ($I_k$) des Videostroms eine erste Korrektur ($\delta_{CBM}(k)$) auf Grundlage eines Vergleichs des vor dem aktuellen Bild ($I_k$) liegenden Bildes mit einer entsprechenden Referenztabelle aus mindestens einer vorbestimmten Referenzversatztabelle ($T_{R,k}$), die dem Fotodetektor-Array (6) zugeordnet ist, zu bestimmen;
   - einem Glied zur Korrektur auf Basis der Morphologie des Bildes (14), das in der Lage ist, für jedes aktuelle Bild ($I_k$) des Videostroms eine zweite Korrektur ($\delta_{W1D}$) auf Grundlage einer Berechnung eines Besiedelungsfehlers des aktuellen Bildes ($I_k$) zu bestimmen; und
   - einem Glied zur Korrektur auf Basis der Bewegung der Szene (16), das in der Lage ist, für jedes aktuelle Bild ($I_k$) des Videostroms eine dritte Korrektur ($\delta_{WHF}(k)$) auf Grundlage einer Anwendung einer Gewichtungsfunktion auf die hohen räumlichen Frequenzen des aktuellen Bildes des Videostroms zu bestimmen,

**dadurch gekennzeichnet, dass**:

- die erste Korrektur ($\delta_{CBM}(k)$) zu einem beliebigen gegebenen Berechnungszeitpunkt (k), der dem aktuellen Bild ($I_k$) des Videostroms zugeordnet ist, gemäß dem folgenden Gesetz bestimmt wird:

$$\delta_{CBM}(k) = \alpha_k * T_{R,k}$$

wobei $\delta_{CBM}(k)$ der aktuelle Wert der ersten Korrektur zum Berechnungszeitpunkt k ist; $T_{R,k}$ die Referenzversatztabelle ist, die zum Berechnungszeitpunkt k eingesetzt wird; und

$\alpha_k$ ein erster Gewichtungsfaktor, im Bereich zwischen 0 und 1, zum Berechnungszeitpunkt ist,

• der erste Gewichtungsfaktor ($\alpha_k$) gemäß dem folgenden Gesetz bestimmt wird:

$$\alpha_k = \frac{\langle F_1(T_{R,k}) | F_1(I_{k-1}) \rangle}{\langle F_1(T_{R,k}) | F_1(T_{R,k}) \rangle}$$

wobei $\langle | \rangle$ das kanonische Skalarprodukt ist;
$F_1$ ein erster vorbestimmter Hochpassfilter ist; und
$I_{k-1}$ ein Bild ist, das vor dem aktuellen Bild ($I_k$) liegt,

• die zweite Korrektur ($\delta_{W1D}$) zu einem beliebigen gegebenen Berechnungszeitpunkt (k), der dem aktuellen Bild ($I_k$) des Videostroms zugeordnet ist, auf Grundlage einer Berechnung eines Besiedlungsfehlers des aktuellen Bildes ($I_k$) so bestimmt wird, dass:

    - mindestens ein Zwischenbild erzeugt wird, indem die Größe des aktuellen Bildes ($I_k$) um einen Reduzierungsfaktor reduziert wird; und
    - der Mittelwert, über die Spalten, der Gradienten der Zeilen des Zwischenbildes berechnet wird,

• die dritte Korrektur ($\delta_{WHF}(k)$) zu einem beliebigen gegebenen Berechnungszeitpunkt (k), der dem aktuellen Bild ($I_k$) des Videostroms zugeordnet ist, gemäß dem folgenden Gesetz bestimmt wird:

$$\delta_{WHF}(k) = \gamma * F_{Sat}(F_{Schwelle}(F_2(I_k)))$$

wobei $\delta_{WHF}(k)$ der Wert der dritten Korrektur ist, der dem Zeitpunkt k zugeordnet ist;
$\gamma$ ein dritter vorbestimmter Gewichtungsfaktor ist;
$F_{Sat}$ eine vorbestimmte Sättigungsfunktion ist;
$F_{Schwelle}$ eine vorbestimmte Schwellenwertfunktion ist; und
$F_2$ ein zweiter vorbestimmter räumlicher Hochpassfilter ist.

9. Eichvorrichtung (2) für ein Fotodetektor-Array (6) nach dem vorstehenden Anspruch, **dadurch gekennzeichnet, dass** der zweite räumliche Hochpassfilter ($F_2$) einen Zeilenfilter, der so konfiguriert ist, dass er auf die Zeilen des aktuellen Bildes ($I_k$) wirkt, und einen Spaltenfilter umfasst, der so konfiguriert ist, dass er auf die Spalten des aktuellen Bildes ($I_k$) wirkt.

10. Eichvorrichtung (2) nach Anspruch 9, **dadurch gekennzeichnet, dass** sie eine Verarbeitungskette (10) umfasst, die so konfiguriert ist, dass sie eine von der Versatzberechnungsstufe (8) berechnete Versatztabelle empfängt, um den Videostrom zu verarbeiten und/oder zu korrigieren.

11. Eichvorrichtung (2) für ein Fotodetektor-Array (6) nach einem der Ansprüche 8 bis 10, **dadurch gekennzeichnet, dass** sie ein Glied zum Schätzen von Bewegungen (18) umfasst, das so konfiguriert ist, dass es einen räumlichen Gradienten und einen zeitlichen Gradienten der Bilder vergleicht und am Ausgang eine Information bezüglich einer Bewegungsrichtung im aktuellen Bild ($I_k$) liefert.

12. Bildgebungssystem (5), das eine Bildgebungsvorrichtung (4) und eine Eichvorrichtung (2) nach einem der Ansprüche 8 bis 11 umfasst, wobei die Eichvorrichtung (2) am Ausgang der Bildgebungsvorrichtung (4) angeschlossen ist und wobei die Bildgebungsvorrichtung (4) ein Fotodetektor-Array (6) umfasst, das so konfiguriert ist, dass es Antwortsignale des Fotodetektor-Arrays (6) an die Eichvorrichtung (2) ausgibt.

**Claims**

1. Method for calibrating a photodetector array (6) providing a set of response signals forming a video stream comprising a series of current images ($I_k$), comprising:

    - a determination step, wherein an offset table is determined for each current image ($I_k$) of the video stream from at least two corrections from among the following:

        • a first correction ($\delta_{CBM}(k)$) from a comparison of the image prior to the current image ($I_k$) to a corresponding reference table from among at least one predetermined reference offset table associated with the photodetector array (6);

• a second correction ($\delta_{W1D}$) from a calculation of a column error of the current image ($I_k$); and
• a third correction ($\delta_{WHF}(k)$);

- a calculation step, wherein a current value of an offset table, equal to a sum between a previous value of the offset table and a weighted sum of the at least two corrections, is calculated, with each coefficient of the offset table being associated with a respective photodetector of the photodetector array (6),

**characterized in that**:

• the first correction ($\delta_{CBM}(k)$) at any given calculation instant (k) associated with the current image ($I_k$) of the video stream, is determined according to the law:

$$\delta_{CBM}(k) = \alpha_k * T_{R,k}$$

where $\delta_{CBM}(k)$ is the current value of the first correction at the calculation instant k;
$T_{R,k}$ is the reference offset table implemented at calculation instant k; and
$\alpha_k$ is a first weighting factor, between 0 and 1, at calculation instant,

• the first weighting factor ($\alpha_k$) is determined according to the law:

$$\alpha_k = \frac{\langle F_1(T_{R,k}) | F_1(I_{k-1}) \rangle}{\langle F_1(T_{R,k}) | F_1(T_{R,k}) \rangle}$$

where $< | >$ is the canonical scalar product;
$F_1$ is a first predetermined high-pass filter; and
$I_{k-1}$ is the image prior to the current image ($I_k$),

• the second correction ($\delta_{W1D}$), at any given calculation instant (k) associated with the current image ($I_k$) of the video stream, is determined from a calculation of a column error of the current image ($I_k$), so that:

- at least one intermediate image is generated by reducing the size of the current image ($I_k$) by a reduction factor; and
- the average, over the columns, of the gradients of the lines of the intermediate image is calculated,

• the third correction ($\delta_{WHF}(k)$) at any given calculation instant (k) from the current image ($I_k$) of the video stream, is determined according to the law:

$$\delta_{WHF}(k) = \gamma * F_{sat}(F_{threshold}(F_2(I_k)))$$

where $\delta_{WHF}(k)$ is the value of the third correction associated with instant k;
$\gamma$ is a third predetermined weighting factor;
$F_{sat}$ is a predetermined saturation function;
$F_{threshold}$ is a predetermined thresholding function; and
$F_2$ is a second predetermined high-pass spatial filter.

2. Calibration method according to claim 1, **characterized in that** the second correction ($\delta_{W1D}$) is equal to a spatial integral of an average of the line gradients over the columns of a current image ($I_k$) of the video stream.

3. Calibration method according to the preceding claim, **characterized in that** the average is a robust average obtained from the gradient values falling within a predetermined confidence interval.

4. Calibration method according to claim 1, **characterized in that** the second high-pass spatial filter ($F_2$) comprises a line filter configured to act on the lines of the current image ($I_k$) and a column filter configured to act on the columns of the current image ($I_k$), and **in that** the method comprises implementation of the line filter and/or the column filter as a function of a result of an estimation of a motion in the video stream.

5. Calibration method according to any one of preceding claims, **characterized in that** the video stream is obtained by applying a one-point calibration and/or a photometric non-uniformity correction to the response signals.

6. Calibration method according to any one of preceding claims, **characterized in that** the calculation of the third correction ($\delta_{WHF}(k)$) is preceded by the application of a defective pixel correction to the video stream.

7. Calibration method according to any one of preceding claims, further comprising implementation of the current value of the offset table to correct the video stream in order to deliver a corrected video stream.

8. Calibration device (2) for calibrating a photodetector array (6) providing a set of response signals forming a video stream comprising a series of images, comprising an offset calculation stage (8) capable of determining an offset table from at least two corrections for each current image ($I_k$) of the video stream, the offset calculation stage comprising at least two of the following:

- a correction member based on reference tables (12) capable of determining for each current image ($I_k$) of the video stream a first correction ($\delta_{CBM}(k)$), from a comparison of the image preceding the current image ($I_k$) to a corresponding reference table from among at least one predetermined reference offset table ($T_{R,k}$) associated with the photodetector array (6);
- a correction member based on the image morphology (14) capable of determining, for each current image ($I_k$) of the video stream, a second correction ($\delta_{W1D}$) from a calculation of a column error of the current image ($I_k$); and
- a correction member based on the motion of the scene (16) capable of determining, for each current image ($I_k$) of the video stream, a third correction ($\delta_{WHF}(k)$) by applying a weighting function to the high spatial frequencies of the current image of the video stream,

**characterized in that**:

• the first correction ($\delta_{CBM}(k)$) at any given calculation instant (k) associated with the current image ($I_k$) of the video stream, is determined according to the law:

$$\delta_{CBM}(k) = \alpha_k * T_{R,k}$$

where $\delta_{CBM}(k)$ is the current value of the first correction at the calculation instant k; $T_{R,k}$ is the reference offset table implemented at calculation instant k; and $\alpha_k$ is a first weighting factor, between 0 and 1, at calculation instant,

• the first weighting factor ($\alpha_k$) is determined according to the law:

$$\alpha_k = \frac{\langle F_1(T_{R,k}) | F_1(I_{k-1}) \rangle}{\langle F_1(T_{R,k}) | F_1(T_{R,k}) \rangle}$$

where $< | >$ is the canonical scalar product; $F_1$ is a first predetermined high-pass filter; and $I_{k-1}$ is the image prior to the current image ($I_k$),

• the second correction ($\delta_{W1D}$), at any given calculation instant (k) associated with the current image ($I_k$) of the video stream, is determined from a calculation of a column error of the current image ($I_k$), so that:

- at least one intermediate image is generated by reducing the size of the current image ($I_k$) by a reduction factor; and
- the average, over the columns, of the gradients of the lines of the intermediate image is calculated,

• the third correction ($\delta_{WHF}(k)$) at any given calculation instant (k) from the current image ($I_k$) of the video stream, is determined according to the law:

$$\delta_{WHF}(k) = \gamma * F_{sat}(F_{threshold}(F_2(I_k)))$$

where $\delta_{WHF}(k)$ is the value of the third correction associated with instant k; $\gamma$ is a third predetermined weighting factor; $F_{sat}$ is a predetermined saturation function; $F_{threshold}$ is a predetermined thresholding function; and $F_2$ is a second predetermined high-pass spatial filter.

9. Calibration device (2) for calibrating a photodetector array (6) according to the preceding claim, **characterized in that** the second high-pass spatial filter ($F_2$) comprises a line filter configured to act on the lines of the current image ($I_k$), and a column filter configured to act on the columns of the current image ($I_k$).

10. Calibration device (2) according to claim 9, **characterized in that** it comprises a processing system (10) configured to receive an offset table calculated by the offset calculation stage (8) in order to process and/or correct the video stream.

11. Calibration device (2) for calibrating a photodetector array (6) according to any one of claims 8 to 10, **characterized in that** it comprises a motion estimation member (18) configured to compare a spatial gradient and a temporal gradient of the images and to output information relating to a direction of motion in the current image ($I_k$).

12. Imaging system (5) comprising an imaging device (4) and a calibration device (2) according to any one of claims 8 to 11, the calibration device (2) being connected to the output of the imaging device (4) and the imaging device (4) comprising a photodetector array (6) configured to deliver response signals from the photodetector array (6) to the calibration device (2).

FIG.1

**EP 4 020 978 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018352174 A1